# EUROPÄISCHE PATENTSCHRIFT

(11) **EP 2 364 875 B1**
(45) Veröffentlichungstag und Bekanntmachung des Hinweises auf die Patenterteilung: **25.11.2015**
(21) Anmeldenummer: 11155397.0
(22) Anmeldetag: 22.02.2011
(51) Int. Cl.: B60N 2/28

(54) **Kindersicherheitssitz**
Child safety seat
Siège de sécurité pour enfants

(30) Priorität: 12.03.2010 DE 202010000372 U
(43) Veröffentlichungstag der Anmeldung: 14.09.2011
(73) Patentinhaber: Curt Würstl Vermögensverwaltungs-GmbH & Co. KG, 95032 Hof (DE)
(72) Erfinder: Würstl, Jan-Stefan, 95194, Regnitzlosau (DE)
(74) Vertreter: Sperschneider, Alexandra

(56) Entgegenhaltungen:
- EP-A2- 1 116 625
- DE-U1- 7 907 643
- DE-U1-202009 005 205
- FR-A1- 2 726 517
- US-A- 4 603 903
- US-A1- 2009 184 550

## Beschreibung

Die Erfindung betrifft einen Kindersicherheitssitz zum Aufstellen auf einen oder integriert in einem Kraftfahrzeugsitz, mindestens aufweisend ein Sitzteil mit einem Sitzelement und Seitenwänden und einen an den Seitenwänden in Führungen geführten Fangkörper, der gegenüber den Seitenwänden mindestens in der Tiefe des Sitzteils relativ verschiebbar angeordnet ist.

Ein Kindersicherheitssitz der gattungsgemäßen Art ist aus der DE 92 06 604 U1 bekannt und geeignet zur nachträglichen Befestigung in einer Gebrauchsposition auf einer vorhandenen Auflagefläche, insbesondere auf dem Sitz eines Fahrzeugs. Dieser Sicherheitssitz weist eine Sitzschale, eine Rückenlehne sowie beidseitig der Sitzfläche und der Rückenlehne, zumindest im Verbindungsbereich von diesen, seitliche Stützelemente und ein quer über die Sitzfläche und mit Abstand oberhalb derselben sich erstreckendes Rückhalteelement in Form eines Fangkörpers auf. An den beiden Enden des Rückhalteelementes sind Haltearme vorgesehen, die etwa rechtwinklig nach oben abstehen und zueinander parallel angeordnet sind. Zur Anpassung der Lage des Rückhalteelementes an die Körpergröße des Kindes, das in dem Kindersicherheitssitz sitzt, ist vorgesehen, dass die beiden seitlichen Stützelemente an einer Sitzschale mit Führungen verschiebbar auf je einen Haltearm aufgesteckt sind. Die Haltearme und die Führungen weisen zusammenwirkende Organe zum gegenseitigen Verriegeln der Haltearme mit den Stützelementen in unterschiedlichen Einschubpositionen und zur Aufnahme der Rückhaltekräfte für den Benutzer bei einer Bremsbeschleunigung, z.B. bei einem Verkehrsunfall, auf. Zusätzlich sind Entriegelungsvorrichtungen zum Entriegeln der Haltearme aus der verriegelten Position der Verriegelungsorgane bzw. zum völligen Herausziehen der Haltearme aus den Führungen vorgesehen. Mit der Verstellung wird zugleich die Höhenlage des Rückhalteelementes verändert. Die Arme sind vorzugsweise schräg gestellt angeordnet, so dass beim Hochziehen das Rückhalteelement bzw. der Fangkörper nicht nur gegenüber der Rückenlehne sondern auch gegenüber der Sitzfläche höhenverstellt wird. Diese Positionsveränderung des Rückhalteelementes bietet keinen optimalen Schutz, da die Unterleibtiefe und die Dicke der Oberschenkel, die von dem Rückhalteelement geschützt werden, nicht gleichförmig zunehmen.

Ein Kindersicherheitssitz der gattungsgemäßen Art ist ferner aus der DE 20 2009 005 205 U1 bekannt. Der Fangkörper weist in der Seitensicht eine im Wesentlichen umgekehrte Z-Form auf. Mindestens der Unterteil des Fangkörpers ist durch seitlich vorstehende angeformte oder angesetzte Führungsansätze oder -elemente breiter als der Zwischenraum zwischen den Seitenwänden des Sitzteiles und hiermit in Führungsausnehmungen oder schlitzförmigen Durchbrüchen in den Seitenwänden einschiebbar. Die Führungsausnehmungen und schlitzförmigen Durchbrüche sind in den Seitenwänden von vorn oben nach hinten unten verlaufend eingebracht. Querverlaufend weist der Fangkörper eine Ausnehmung auf, die einen Quergurt aufnimmt, um den Sitz und den Fangkörper am Fahrzeugsitz befestigen zu können.

Ein Autokindersitz der gattungsgemäßen Art ist auch aus der DE 295 10 641 U1 bekannt. Die Fixierung des Autokindersitzes auf einen Kraftfahrzeugsitz erfolgt durch ein fahrzeugeigenes, mindestens ein Beckenteil, insbesondere aber zusätzlich ein Diagonalteil enthaltendes Rückhaltesystem. Das Sitzteil weist flankierende Seitenbegrenzungen in Form von Armlehnen auf, die mit den Seitenwänden eine Auskehlung bilden. Zwischen den Armlehnen liegt ein Fangkörper mit einer horizontalen, sich über seine Breite erstreckenden und nach vorn offenen Auskehlung zur Einlage des Beckengurtabschnittes. Der Fangkörper untergreift in einer Ausführungsform zu seiner Absicherung die Armlehne, kann aber auch mit den Unterkanten seiner Seitenenden auf den Seitenkanten des Sitzes aufsitzen. In einer weiteren Ausführung ist vorgesehen, dass der Fangkörper mit seinen Seitenenden schwalbenschwanzartig zwischen den Armlehnen und den Seitenkanten des Sitzes geführt ist.

Der Fangkörper kann in Sitztiefenrichtung verschiebbar am Sitzteil geführt sein. Der Fangkörper selbst kann ein Kunststoffteil sein und im Wesentlichen eine U-Form aufweisen, so dass bei einem Auffahrunfall das in dem Kindersitz sitzende Kind auf den Fangkörper gedrückt wird. Das Oberteil wird gegen das Unterteil durch die Querkehle niedergedrückt, wodurch nicht auszuschließen ist, dass das Kind aus den Sitz herausfallen kann, wenn die Tiefe der Kehlung, die die Armlehne der Seitenwand bildet, nicht tief genug ausgebildet ist, da diese der Größe eines Kleinkindes angepasst sein sollte, was aber fertigungstechnisch nicht möglich ist. Die Kehlung wird also immer eine Tiefe haben, die der Durchschnittsgröße des Kindes entspricht, das in einem solchen Sitz gesichert gehalten werden soll. Im Falle eines Crashes wird der Verschiebeweg des Fangkörpers begrenzt durch das Erreichen des Bodens der Auskehlungen, die die Armlehne bilden, durch den Quer- bzw. Beckengurtabschnitt und den Diagonalgurtabschnitt.

Fangkörper, die ebenfalls auf die Seitenwände eines Sitzteils auflegbar und darauf verschiebbar angeordnet sind, sind ferner aus der DE 35 17 841 A1, der EP 0 170 733 A1 und der DE 79 07 643 U1 bekannt. Die Beckengurtabschnitte eines Dreipunktgurtes laufen dabei stets entweder in einer querverlaufenden nutenförmigen Ausnehmung im Fangkörper hindurch oder liegen an der Außenseite an. Der Diagonalabschnitt eines Dreipunktgurtes verläuft diagonal über diese Seitenwangen des Kindersitzes oder ist in Führungen geführt oder ist an den Stirnseiten der Seitenwände durch Führungen oder Klemmen gesichert gehalten.

Der Fangkörper ist Bestandteil einer Rückhalteeinrichtung für in Autokindersitzen sitzende Kinder und kommt in vielen Konstruktionsvarianten zur Anwendung. Solch ein Fangkörper kann auch mit einem die Sitzposition des Kindes erhöhenden Sitzteil ohne Rückenlehne verwendet werden, welches auf den Fahrzeugsitz aufgestellt wird und mittels des vorhandenen Dreipunktgurtes des Fahrzeugsitzes gehalten wird, indem der Beckenabschnitt des Dreipunktgurtes durch eine Ausnehmung oder Kehle des Fangkörpers hindurchgezogen und die Schlosszunge in das Schloss am Fahrzeugsitz eingesteckt wird. Der Fangkörper kann auf den Oberschenkeln des Kindes oder auf einem separaten Kindersitz aufliegen bzw. sich unmittelbar durch entsprechende Ansätze auf dem Fahrzeugsitz abstützen. Bei einem Frontaufprall des Fahrzeugs prallt der Oberkörper des Kindes auf die Oberfläche des Fangkörpers. Da dieser mit einer Schaum- oder Polsterungseinlage versehen ist, führt dies zu einer starken Dämpfung und nicht zu Verletzungen des Kindes. Sämtliche bisher bekannten Fangkörpersysteme sind für Kinder im Gewichtsbereich von 9 kg bis 18 kg ausgelegt.

Aus der US 4,909,574 ist ein Autokindersitz bekannt, an dessen Rückenlehne ein Bügel angelenkt ist, dessen Querteil einen Fangkörper trägt. Dieser Fangkörper ist an dem Querteil höhenversetzbar angebracht. Um das Kleinkind aus dem Kindersicherheitssitz herausheben oder hineinsetzen zu können, ist es erforderlich, dass der Bügel nach oben verschwenkt wird.

Ferner ist es aus der DE 35 14 783 A1 bekannt, durch Unterfügteile die Sitzebene eines Kindersitzes an die Körpergröße eines heranwachsenden Kindes anzupassen. Dieser Sitz weist weder Seitenwände am Sitzteil auf, noch einen Fangkörper, der hieran fixiert ist.

FR 2 726 517 A1, welches als nächstliegender Stand der Technick betrachtet wird, offenbart einen Kraftfahrzeugsitz, der zur Beförderung von Kindern verändert werden kann. Hierzu weist der Sitz einen bogenförmigen Rahmen auf, der in normaler Gebrauchsstellung einen oberen Teil der Rückenlehne umgibt. Der bogenförmige Rahmen ist auf Höhe der Mitte der Rückenlehne nach vorne verschwenkbar, so dass der Rahmen im verschwenkten Zustand ein Kind umgreift. Ferner ist ein vorderer Teil der Sitzfläche des Kraftfahrzeugsitzes über zwei seitlich angebrachte Stangen verschwenkbar, so dass die vordere Sitzfläche im verschwenkten Zustand über dem hinteren Teil der Sitzfläche angeordnet und gegen einen unteren Teil der Rückenlehne abgestützt ist.

DE 20 2009 005 205 U1 offenbart einen Autokindersitz, der einen Fangkörper aufweist, wobei die Position der Sitzfläche nicht verändert werden kann.

DE 79 07 643 U1 offenbart einen Autosicherheitssitz für Kinder, wobei ein Fangkörper vorgesehen ist. Um die Sitzhöhe eines Kindes zu verändern, kann ein Polsterkörper auf die Sitzfläche gelegt werden.

EP 1 116 625 A2 offenbart einen Kindersitz, wobei zur Veränderung der Sitzhöhe zwei Seitenteile aufeinander zu und voneinander weg bewegt werden. Die beiden Seitenteile weisen hierzu schräg ausgebildete Vorsprünge auf, die ineinander greifen, wobei in Abhängigkeit des Abstand der Seitenteile ein auf den Vorsprüngen aufliegendes Sitzteil aufgrund der schrägen Vorsprünge verschiedene Höhen erreichen kann. Das Sitzteil und die Seitenteile müssen in den jeweiligen Positionen bspw. über Schrauben arretiert werden.

US 4,603,903 offenbart einen Autositz dessen Sitzteil in verschiedenen Höhen angebracht werden kann, wobei hierzu eine Arretierung des Sitzteils über jeweils zwei Schrauben auf jeder Seite des Sitzes erforderlich ist.

US 2009/0184550 A1 offenbart einen Autokindersitz, der in eine Ruheposition verbracht werden kann, wobei das vordere Sitzteil mit einer Sitzfläche und Seitenwänden nach vorne geschoben werden kann, wodurch der Winkel der Rückenlehne zu der Sitzfläche vergrößert wird.

Aufgabe der vorliegenden Erfindung ist es, die Positionierung eines Fangkörpers an einem Kindersitz dem Körper eines wachsenden Kleinkindes im Gewichtsbereich von 9 kg bis 25 kg anpassbar zu gestalten, um das Sicherheitspotential von Fangkörpern auch für größere Kinder zugänglich machen zu können, ohne dass zusätzliche Rückhaltesysteme zur Anwendung kommen müssen, wie beispielsweise Hosenträgergurte.

Die Aufgabe löst die Erfindung bei einem gattungsgemäßen Kindersicherheitssitz durch Ausgestaltung desselben gemäß der im Anspruch 1 angegebenen technischen Lehre, wonach die Höhenlage des Sitzelementes relativ gegenüber der Unterseite des Fangkörpers einstellbar ist. Vorteilhafte Ausgestaltungen der Erfindung sind in den Unteransprüchen im Detail angegeben.

Um die Höhenlage des Sitzelementes gegenüber dem Fangkörper relativ verändern zu können, sind an oder in den Innenseiten der Seitenwände im Wesentlichen parallel verlaufend mindestens zwei Längsführungen übereinander in definierten Abständen eingebracht. In diese wird dann wahlweise das Sitzelement mit seitlichen Führungsansätzen eingeschoben. Anstelle solcher U-förmigen Führungen können selbstverständlich auch Ansätze angeformt sein, auf die oder an denen das Sitzelement befestigbar ist, z. B. durch an der Unterseite des Sitzelementes angebrachte Klipphalter, die an den Ansätzen angeklippt werden können. Die Halter müssen dabei ebenfalls höhenversetzt angeordnet sein, um die gewünschte Ebene einnehmen zu können. Um Feinabstufungen vornehmen zu können, können auch mehrere Führungen übereinander angeordnet sein.

Es hat sich als zweckmäßig erwiesen, die Längsführungen als längliche Leitkurven auszubilden. Wenn in eine solche Anordnung ein Sitzelement mit zwei seitlichen, beabstandet zueinander angeordneten Führungsansätzen, beispielsweise vorstehenden Bolzen, eingreift, kann das Sitzelement in verschiedene Tiefenstellungen verbracht werden.

Ferner sind in die Führungen Fallen eingebracht, in denen die Führungsansätze, z. B. Bolzen, einrasten. Wenn diese verteilt angeordnet sind, ist eine Verschiebung des Sitzelementes in verschiedene vorgezogene Stellungen möglich, wobei die Sitztiefe ebenfalls verstellt wird, um die Sitzfläche an die Oberschenkellänge des heranwachsenden Kindes anpassen zu können. Das Sitzelement wird beim Einrasten der Bolzen in die Fallen arretiert und nimmt gleichzeitig eine durch die Leitkurve vorgegebene Schrägstellung ein. Sind mehrere solcher Leitkurven übereinander angeordnet, so ist ersichtlich, dass beliebige Abstände zur Unterseite des Fangkörpers einnehmbar sind und gleichzeitig auch unterschiedliche Sitztiefen und -schrägen, die durch die Leitkurven vorgegeben sind, einstellbar sind.

Es kann ferner vorgesehen sein, dass das Sitzelement höhenverstellbar in dem Sitzteil eingepasst ist. Die Höhenverstellung kann beispielsweise durch Unterschieben von Abstandsplatten oder Abstandsrahmen unter das Sitzelement erfolgen. Dadurch kann der Abstand zur Unterseite des an den Seitenwänden geführten Fangkörpers an die Oberschenkeldicke und Torsolänge des heranwachsenden Kindes angepasst werden. In der untersten Position kann ein älteres Kind (25 kg) geschützt in den Sitzteil hineingesetzt werden, in der obersten Position ein Kleinkind von beispielsweise neun Monaten ab 9 kg. Damit ist sichergestellt, dass Kinder der Altergruppe I (neun Monate bis drei Jahre), aber auch der Altersgruppe II mit fahrzeugseitigen Sicherheitsgurten in dem Kindersicherheitssitz über den Fangkörper gesichert gehalten werden, da im Crashfall die Rückhaltekraft großflächig auf das Kind übertragen wird.

Der Fangkörper selbst ist, wie zuvor bereits im Stand der Technik beschrieben, durch einen Quergurt, z. B. den Beckengurtabschnitt oder auch den Beckengurtabschnitt und einen Teil des Schräggurtabschnittes eines Dreipunktsicherheitsgurtes oder einem am Sitz befestigten Gurt gehalten. Diese Gurte oder Gurtabschnitte verlaufen quer an der Vorderseite, vorzugsweise in einer quer verlaufenden Ausnehmung des Fangkörpers. Auch kann in der Ausnehmung mindestens ein Dämpfungselement aus einem kompressierbaren Werkstoff eingebracht sein, der zwischen Quergurt und Bodenwand der Ausnehmung eingefügt ist. Dieses Dämpfungsglied absorbiert beim Aufprall Energie und verlängert gleichzeitig den Quergurt um ein geringes Maß.

Wenn der Fangkörper seitlich schräg gestellte Führungsansätze aufweist, die in Führungsausnehmungen oder Führungsdurchbrüchen in den Seitenwänden von oben schräg verlaufend nach unten geführt sind, so ist ersichtlich, dass hierdurch in einem definierten Bereich auch eine Tiefenverschiebung gleichzeitig zusätzlich sichergestellt ist und damit das Kleinkind auch mit dem Unterleib in dem Kindersicherheitssitz gesichert gehalten wird.

In weiterer Ausgestaltung kann die Höhenlage des Fangkörpers relativ gegenüber der Oberseite des Sitzelementes und dem Sitzteil ebenfalls einstellbar sein. Ferner ist es möglich, dass der Teil der Seitenwand, auf oder in der der Fangkörper geführt ist, in der Höhe gegenüber dem Sitzelement eingestellt werden kann. Hierdurch ist eine bewusste Höhenanpassung des Fangkörpers gegenüber der Sitzfläche des Sitzelementes ebenfalls möglich. Beide Alternativen können auch miteinander kombiniert zur Anwendung kommen.

Es können auch in den Seitenwänden Führungselemente vertikal verstellbar gelagert sein. Hierfür kann beispielsweise ein Ausschnitt in der Seitenwand vorgesehen sein. In diesem Führungselement befindet sich dann die Führung des Fangkörpers. Dies kann ein von oben nach hinten unten schräg verlaufender Durchbruch oder eine Ausnehmung sein öder aber auch eine horizontal verlaufende Führung, in denen die Führungsansätze an dem Fangkörper sichernd eingreifen. Es ist ersichtlich, dass beim Anheben des Führungselementes der Fangkörper gegenüber der Höhe der Sitzfläche angehoben wird, wodurch in gewünschter Weise eine Anpassung an die Größe des Kindes zusätzlich möglich ist. Die Führungselemente in den beiden Seitenwänden sind also gegenüber den Seitenwänden höhenverstellbar an diesen oder durch ineinandergreifende Verzahnungen in der Höhe verstellbar gelagert. Beispielsweise können am Umfang seitlich Verzahnungen an den Fügeflächen vorgesehen sein, die ineinandergreifen, um das Führungselement in der Höhe zu halten. Solche Befestigungen sind auch dann möglich, wenn das Führungselement von der Außenseite der Seitenwand abgedeckt ist und in einer Ausnehmung versetzbar angeordnet ist. Die Höhenverstellung kann aber auch über aufwändigere, untergreifende Hebemechaniken erfolgen. In diesem Fall muss das Führungselement beispielsweise in Nuten mit an den Seitenflächen mit einem Ansatz oder Gleitstein geführt sein. Dem Fachmann eröffnen sich hier diverse Möglichkeiten, ohne das bekannte Lagerungsprinzip des Fangkörpers in dem Führungselement bzw. den Schlitzen und Durchbrüchen zu verlassen.

Die Oberseiten der Seitenwände können als Führungsebenen für den Fangkörper ebenfalls ausgebildet sein, auf denen der Formkörper mit Seitenrändern aufliegt. Es empfiehlt sich auch hier eine Längsführung vorzusehen, damit ein sicherer Halt an den Seitenwänden gegeben ist. Grundsätzlich können die Führungen auch außenseitig an den Seitenwänden vorgesehen sein. In diesem Fall muss der Fangkörper überstehende Seitenränder aufweisen, an denen übergreifende Führungsmittel angebracht oder angeformt werden können, die in die Längsführungen eingreifen. Auch ist es möglich, den Fangkörper so auszubilden, dass dann, wenn außenseitig Schrägführungsansätze vorgesehen sind, diese in außenseitig in die Seitenwände eingebrachte Ausnehmungen oder Durchbrüche geführt sein können. Die Führungsmittel können also innenseitig an den Seitenwänden, gepaart mit den Ansätzen an dem Fangkörper, oder auch außenseitig an den Seitenwänden, gepaart mit entsprechenden Führungselementen an den Überständen der Seitenränder des Fangkörpers, vorgesehen sein. Auch kann der Fangkörper mit den Seitenrändern unmittelbar auf den Oberseiten der Seitenwände, aufliegen und relativ verschiebbar angeordnet sein, wenn eine Längsführung vorgesehen ist. Bei einer Schrägführung, die zusätzlich eine Tiefenverstellung ermöglicht, ist es empfehlenswert, den Führungsansatz am Fangkörper oberhalb der Längsführung für das Sitzelement enden zu lassen. Es ist bei der außenseitigen Anbringung aber auch möglich, diesen noch über den unteren Wandbereich der Seitenwände verlaufen zu lassen, um so einen höheren Einstellungsbereich des Fangkörpers zu erreichen.

Der Fangkörper einerseits und der Sitz andererseits können gemeinsam mittels des fahrzeugeigenen Gurtes oder eines Gurtabschnittes oder mit einem gesonderten Quergurt an einem Fahrzeugsitz befestigt werden, indem die Gurtzunge in das Gurtschloss gesteckt wird oder gesonderte Befestigungselemente an den Quergurten vorgesehen sind, z. B. Aufrastschlosselemente, die an den Fixpunkten am Fahrzeugsitz oder Kindersitz befestigbar sind. Andererseits ist es auf einfache Weise möglich, nach dem Lösen der Schlossverbindung des Gurtes den Fangkörper abzunehmen, das Kind aus den Sitz herauszunehmen oder wieder hineinzusetzen und den Fangkörper in die Führungen einzuführen und mit dem Gurt wieder zu sichern.

Zur Führung des Gurtes kann in den Fangkörper quer verlaufend eine Ausnehmung vorgesehen sein. Es können darüber hinaus auch Führungsmittel zusätzlich vorgesehen sein, damit der Gurt in der anliegenden Position in der Ausnehmung gehalten wird.

Die Seitenwände können aus einem Kunststoffformteil bestehen. Wenn diese Leitkurven aufweisen, ist diese Ausführungsform bevorzugt zu wählen. Die Seitenwände können aber auch aus einem Blasformteil bestehen, ebenso können die Führungselemente für die zweite Alternative aus einem Blaskörper bestehen. Um die Höhenposition dann allerdings sicherzustellen, müssen die ineinandergreifenden Teile so ausgestaltet sein, dass eine formschlüssige und/oder kraftschlüssige Verbindung mit den restlichen Seitenwandteilen möglich ist.

Da das Sitzelement in der Tiefe verstellbar angeordnet ist, ist auf einfache Weise auch eine Liegeposition des Sitzelementes im Kindersicherheitssitzes realisierbar. Hierzu kann an dem Sitzelement direkt oder an einer diesem gegenüber verschiebbaren Platte rückseitig verschwenkbar ein Lordosenstützteil angebracht sein, das sich an dem Rückenlehnenelement mindestens mit dem oberen Ende abstützt. Beim Vorziehen des Sitzelementes ist das Lordosenstützteil in verschiedene Schräglagen verbringbar, so dass eine Sitz-Liegeposition eingenommen werden kann, ohne das Sitzteil selbst vorziehen zu müssen und die Rückenlehne angelenkt daran befestigen zu müssen. Diese Verstellmöglichkeit kann selbstverständlich auch ergänzend vorgesehen sein, um den Liegekomfort zusätzlich zu verbessern.

In einfachster Ausführung ist das Lordosenstützteil nur an dem Sitzelement rückseitig schwenkbeweglich befestigt und liegt lose an der Rückenlehne an. Wenn die Sitztiefe auch verstellbar ausgeführt ist, so kann das Lordosenstützteil auch an einer Platte befestigt sein, die eine Verlängerung zu dem Sitzelement bildet und gegenüber dem Sitzelement in der Tiefe relativ verschiebbar ist. Hierzu können beispielsweise zwei Längsschlitze in dem Sitzelement vorgesehen sein, in denen Bolzen, die an der Platte befestigt sind, eingreifen, so dass sie längsgeführt um ein definiertes Maß relativ gegeneinander verschiebbar sind. An der Platte ist rückseitig das Lordosenstützteil angelenkt. Beim Herausziehen verändert sich also der Abstand in gewünschter Weise bzw. kann die Platte separat gegenüber dem Sitzelement verschoben werden. Das Lordosenstützteil oder die Platte sollten mittig nur über eine Teilbreite des Rückenlehnenelementes verlaufen, um ein ungehindertes Verschieben des Sitzelementes zu gewährleisten.

Grundsätzlich kann die Rückenlehne abnehmbar oder nicht abnehmbar mit dem Sitzteil verbunden sein, so dass nach Abnahme der Rückenlehne das Sitzteil als Sitzerhöhung und zugleich auch als Sicherungsteil weiterhin benutzt werden kann. Auch kann der Fangkörper obenseitig so ausgebildet sein, dass er sich an der Rückenlehne oder den daran angeformten Seitenwänden stirnseitig in einer Endposition abstützt. Im Falle, dass die Rückenlehne abgenommen ist, kann diese Endposition die Anlageposition an der Rückenlehne des Fahrzeugsitzes sein.

In weiterer Ausgestaltung kann vorgesehen sein, dass der obere Abschnitt des Fangkörpers eine Polsterung aufweist. Des Weiteren kann zur Dämpfung im Falle eines Aufpralls in der Ausnehmung mindestens ein Dämpfungselement aus kompressierbarem Werkstoff eingebracht sein, der zwischen Quergurt und Bodenwand der Ausnehmung eingefügt ist. Hierdurch werden die Aufprallkräfte ebenfalls mit absorbiert. Der Fankörper kann ferner mindestens im Bereich zwischen den Seitenwänden des Sitzteiles eine definierte Elastizität aufweisen, um auch hier eine Energieabsorbtion im Falle eines Aufpralls zusätzlich zu bewirken. Der Fangkörper kann beispielsweise aus geschäumtem Kunststoff mit oder ohne Verstärkungseinlage bestehen. Er kann aber auch ein geblasener Kunststoffkörper sein. Ebenso ist der Fangkörper mindestens obenseitig mit einem Stoffbezug überspannbar. Der Sitzteil kann selbstverständlich auch vorziehbar oder um einen fiktiven Drehpunkt verschwenkbar auf einem Untergestell montiert sein, das auf dem Fahrzeugsitz aufstellbar und daran befestigbar ist. Solche Adapter sind bekannt. Zum Zwecke der Fixierung müssen dann an der Unterseite des Sitzteiles Querbolzen vorgesehen sein, über die Arretierungshaken des Untersetzteiles greifen können.

Der Fangkörper kann aber auch an Teilen der Rückenlehne, z. B. an Seitenwände der Rückenlehne, angebracht sein, zu welchem Zweck in diese Seitenwände horizontale oder schräg von oben nach unten verlaufende Führungen parallel in beiden Seitenwänden übereinander in Form von Nuten oder Durchbrüchen eingebracht sind, in die die Führungsansätze an dem Fangkörper in den unterschiedlichen Höhenlagen einschiebbar sind. Es ist aber auch möglich, in die Seitenwände nur eine einzige Führung paarweise einzubringen. Zur relativen Höhenverstellung gegenüber einer definierten Höhenposition des Sitzelementes können die Seitenwände an der Rückenlehne höhenverstellbar angebracht sein. Auch kann die Rückenlehne insgesamt gegenüber einem Trägerelement höhenverstellbar ausgeführt sein, auch dann erfolgt eine relative Höhenverstellung des daran befestigten Fangkörpers gegenüber der Höhe des Sitzelementes.

Die Erfindung wird nachfolgend anhand der in der Zeichnung dargestellten Ausführungsbeispiele ergänzend erläutert.

In den Figuren zeigen:
- Fig. 1: eine vorbekannte Ausführung eines Autokindersicherheitssitzes mit einem Fangkörper,
- Fig. 2: in schematischer Darstellung eine Seitenansicht einer Seitenwand mit leitkurvenförmigen Längsführungen für die Aufnahme von Sitzelementen,
- Fig. 3: eine schematische Darstellung eines Sitzelementes, verbunden mit einer Platte, an der ein Lordosenstützteil befestigt ist,
- Fig. 4: die Anordnung nach Fig. 3 mit ausgezogenem Sitzelement,
- Fig. 5: in schematischer Darstellung verschiedene Höhenanordnungen und Auszugspositionen des Sitzelementes gegenüber dem Fangkörper an einem Sitzteil,
- Fig. 6: in schematischer Seitenansicht einen Kindersicherheitssitz mit eingeschobenem Sitzelement und einem Lordosenstützteil,
- Fig. 7: das in Fig. 6 dargestellte Ausführungsbeispiel in einer vorgezogenen Position mit einem Lordosenstützteil,
- Fig. 8: eine Anordnung, bei der die Höhenlage der Führung eines Fangkörpers veränderbar ist, und
- Fig. 9: das in Fig. 8 schematisch dargestellte Ausführungsbeispiel mit geänderter Höhenlage eines Führungselementes mit darin geführtem Fangkörper.

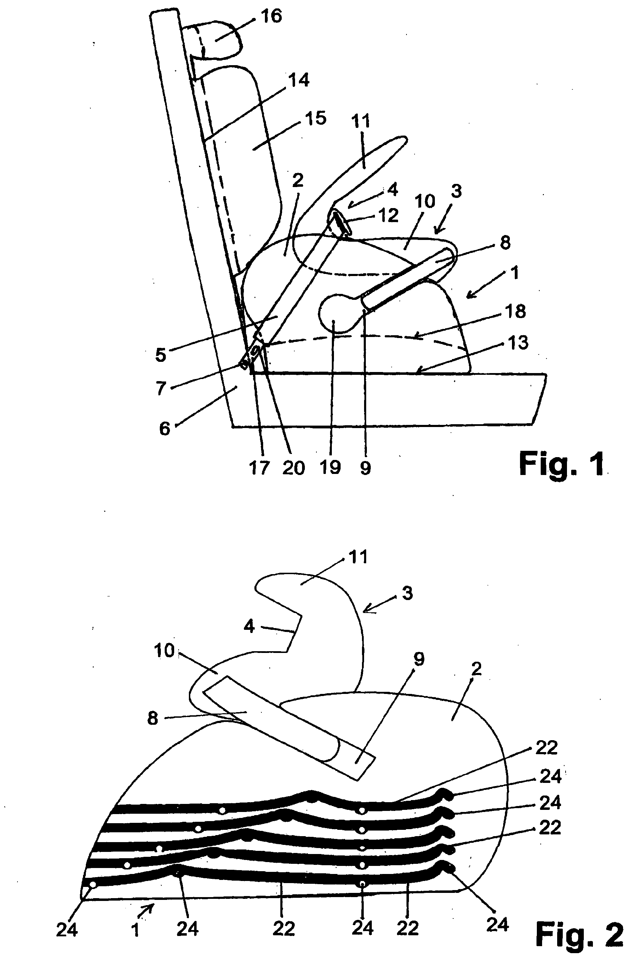

Fig. 1 zeigt in schematischer Seitenansicht einen Fahrzeugsitz 6, der aus einem Sitzteil und einem Rückenlehnenteil besteht. Im Rückenlehnenteil sind als Fixpunkte 7 beabstandet zueinander Querbolzen angeordnet, die für eine ISOFIX-Befestigung von Kindersitzen und Gepäckstücken und dergleichen in modernen Kraftfahrzeugen vorgesehen sind. Auf dem Fahrzeugsitz 6 ist ein Autokindersitz aufgestellt. Dieser besteht aus einem Sitzteil 1 und einer daran rückseitig befestigten Rückenlehne 14. Das Sitzteil 1 weist beabstandet zueinander angeordnete Seitenwände 2 auf, sowie ein Unterteil mit der Sitzfläche 18 und einem Boden 13, der mindestens durch Unterseiten der Seitenwände 2 gebildet ist. Die Seitenwände 2 sind so geformt, dass sie an der Oberseite Armlehnen für das Kind bilden, das in den Sitz gesetzt wird. An der Rückenlehne 14 sind zum Seitenschutz Seitenwände 15 vorgesehen. Ferner ist eine an der Rückenlehne 14 verstellbar oder fest verbunden eine Kopfstütze 16 mit Kopfseitenschutz vorgesehen.

In den Seitenwänden 2 des Sitzteiles 1 sind parallel verlaufend schlitzförmige Durchbrüche 9 eingearbeitet, die in einen runden Durchbruch 19 oberhalb der Sitzfläche 18 münden. Diese Durchbrüche 9 nehmen die seitlichen Führungsansätze 8 des Fangkörpers 3 auf, dessen Grundform Z-förmig bzw. in der Darstellung umgekehrt Z-förmig ist. Der Fangkörper 3 weist ferner ein Verbindungsteil 10 und einen oberen, als Fangkörper dienenden oberen Teil 11 auf, der schräg verlaufend eingezeichnet ist und im Wesentlichen parallel zu dem Führungsansatz 8 verläuft. Der obere Teil 11 kann aber auch in eine Ebene übergehen, wodurch die Oberseite als Spielfläche nutzbar ist. Dies sind Gestaltungsmerkmale, die auf die Erfindung keinen wesentlichen Einfluss nehmen. Der Fangkörper 3 weist ferner durch seine Formgebung eine quer verlaufende Ausnehmung 4 auf, die den Quergurt 5 aufnimmt, der beidseitig des Sitzes an den Fixpunkten 7 befestigt ist. Der Quergurt 5 ist dazu in Führungselementen 12 von unten her eingelegt und hierdurch in der offenen Ausnehmung 4 gesichert gehalten und liegt am Boden der Ausnehmung 4 an.

In die schräg angeordneten Durchbrüche 9 in den Seitenwänden 2 greifen gleitend die schrägen Führungsansätze 8 ein. Der Verbindungsteil 10 des Fangkörpers 3 weist eine Breite auf, die der lichten Weite zwischen den beiden Seitenwänden 2 entspricht, so dass der Fangkörper 3 von vorn mit den Führungsansätzen 8 in die schräg verlaufenden Durchbrüche 9 hineingeschoben werden kann.

Bezogen auf den Aufstellboden 13 verlaufen die Durchbrüche 9 in einem spitzen Winkel. Dieser Winkel ist abhängig von der Konstruktion des Sitzes und von der gewünschten Krafteinleitung über die Führungsansätze 8 in die Seitenwand 2, wenn auf das obere Teil 11 des Fangkörpers 3 eine Kraft ausgeübt wird. Es ist ersichtlich, dass bei einem Aufprall des Kindkörpers auf das Oberteil 11 eine Kraftkomponente auch in Längsrichtung der Führungsansätze 8 nach unten verläuft, so dass dabei der Fangkörper 3 zumindest in der dargestellten Position verbleibt bzw. nach unten in den runden Durchbruch 19 hineingeschoben wird. Es erfolgt also keine Vorverlagerung des Fangkörpers 3, wie dies beim Stand der Technik im Falle eines Auffahrunfalls gegeben ist. Die Gurtsicherung ermöglicht dabei nur eine bestimmte Auslenkung, die gewollt ist, um eine Dämpfungswirkung beim Aufprall zu erzielen.

Der Quergurt 5 selbst weist aufhakbare Aufrastschlosselemente 17 an den Enden auf. Diese können beispielsweise Mini-Konnektoren sein, wie sie für Lastgurte bekannt sind. Diese Konnektoren werden auf die Querbolzen, die die Fixpunkte 7 bilden, aufgehängt und sind durch einen Verriegelungsschieber daran befestigt. Zum Lösen steht der Schieber mit einem Betätigungselement 20 in Wirkverbindung.

Es hat sich gezeigt, dass allein durch einen solchen Gurt der Autokindersitz gesichert am Fahrzeugsitz 6 befestigt werden kann, zumal der Quergurt 5 über die oberen Kanten der Seitenwände 2 verläuft, so dass der Sitzteil 1 hierüber direkt zurückgehalten wird. Anstelle eines solchen Quergurtes 5 kann selbstverständlich auch der vorhandene Beckengurtabschnitt eines Dreipunktgurtes oder ein vorhandener Beckengurt zur Sicherung des Kindersitzes an dem Fahrzeugsitz 6 vorgesehen sein. Diese Gurte weisen entweder feste Basispunkte im unteren und oberen Bereich des Fahrzeugsitzes an der Karosserie oder am Fahrzeugsitz selbst auf und sind am Abschnittsende mit einer Öse mit Schlosszunge versehen, die in ein Schloss in dem Polster des Sitzes einsteckbar ist oder in ein Schloss, das an einem Gurt oder einer elastischen Verbindung befestigt ist. Der Diagonalgurt kann dabei zur weiteren Sicherung in bekannter Weise diagonal über die Rückenlehne 14 verlaufen oder auch über die Seitenwände 15 der Rückenlehne 14.

Fig. 2 zeigt in einer schematischen Darstellung die Innenseite einer Seitenwand 2 eines Sitzteiles 1 mit im Wesentlichen parallel angeordneten Längsführungen 22 in Form von Leitkurven, die als U-förmige Nuten in die Seitenwand 2 eingebracht sind. Auf der gegenüberliegenden Seite weist die benachbarte Seitenwand 2 die gleiche Struktur jedoch spiegelbildlich verlaufend auf. In den Seitenwänden 2, oberhalb der Längsführungen 22 endend, sind schlitzförmige Durchbrüche 9 eingebracht, die zur Aufnahme und Führung eines länglichen Führungsansatzes 8 an den Seitenwänden des Fangkörpers 3 dienen. Der Fangkörper 3 besteht aus dem Verbindungsteil 10 und dem oberen Teil 11, der in einem Crashfall den Oberkörper der Kindes und bei entsprechend langer Ausbildung auch den Kopf des Kindes aufzufangen vermag. Der Fangkörper 3 weist ferner auch eine Ausnehmung 4 auf, wie sie auch im Beispiel in Fig. 1 gegeben ist. Der Fangkörper 3 selbst weist eine Breite auf, die in diesem Ausführungsbeispiel schmäler ist als die lichte Weite zwischen den Seitenwänden 2 des Sitzteiles 1, so dass der Fangkörper mit den seitlichen Führungsansätzen 8 in den Durchbrüchen 9 geführt gelagert ist.

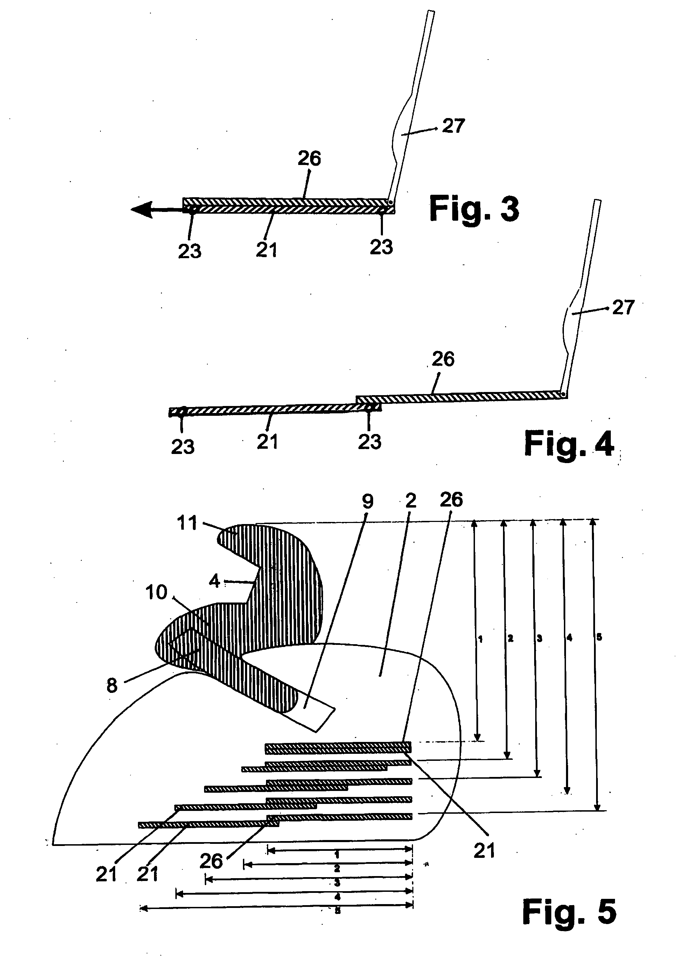

Es ist ersichtlich, dass dann, wenn der Gurt, wie aus Fig. 1 ersichtlich, in die Ausnehmung 4 gelegt wird, entsprechend der Spannung des Gurtes der Fangkörper 3 tief und nach hinten gegen das Kind gedrückt wird. Um nun eine Höhenanpassung vornehmen zu können, sind die Längsführungen 22 eingebracht. In diese greifen seitlich an den in Fig. 3 schematisch dargestellten Sitzelementen 21 angebrachte Führungsansätze 23 ein. Diese Führungsansätze sind beabstandet voneinander vorn und hinten an dem Sitzelement 21 angebracht, so dass hierüber entsprechend dem Leitkurvenverlauf der Längsführung 22 Schrägstellungen eingenommen werden können. Die Führungsansätze 23, die beispielsweise vorstehende Bolzen sind, gleiten beim vorderseitigen Einsetzen des Sitzelementes 21 in ein Paar Längsführungen 22 in diesen entlang. In der Endposition gleitet der hintere Führungsansatz 23 in eine Rastfalle 24 und ist in der jeweiligen Höhenlage arretiert. Für die Höhenlageneinstellung sind fünf Längsführungen 22 vorgesehen. Diese weisen darüber hinaus mehrere Rastfallen 24 und eine geschwungene wellenförmige Form auf, so dass auch unterschiedliche Schrägstellungen beim Vorziehen und Einrasten der Führungsansätze 23 in die weiteren Fallen 24 möglich sind.

Fig. 5 gibt Verstellmöglichkeiten schematisch an. Es ist ersichtlich, dass durch Einschieben des Sitzelementes 21 in die beiden seitlichen Längsführungen 22 in den Seitenwänden 2 unterschiedliche Höhenpositionen eingenommen werden können.

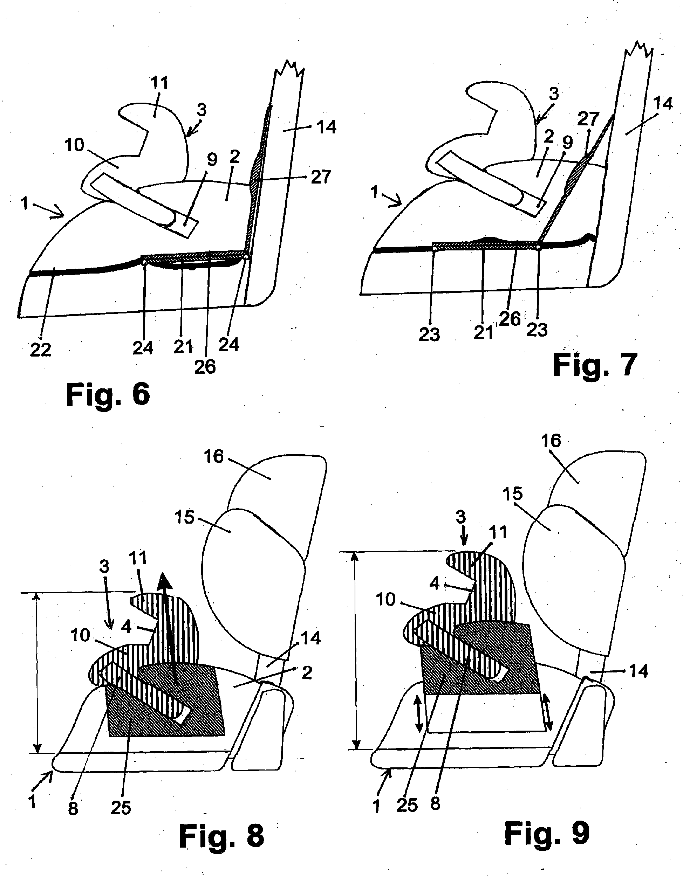

Fig. 3 und Fig. 4, aber auch die Fig. 5, 6 und 7, zeigen ferner, dass an dem Sitzelement 21 verschiebbar eine Platte 26 befestigbar ist. Dies kann beispielsweise über Langlochführungen geschehen. Die Verbindungselemente, die hierfür erforderlich sind, sowie die Führungen sind nicht dargestellt. An den Platten 26 sind rückseitig Lordosenstützen 27 in Form von hochstehenden Flächenelementen angelenkt. Diese stützen sich, wie aus Fig. 6 und 7 ersichtlich, an der Rückenlehne 14 ab. Aus den Fig. 6 und 7 ist auch ersichtlich, dass beim Vorziehen des Sitzelementes 21 das Lordosenstützteil 27 aus der unmittelbar anliegenden Position an der Rückenlehne 14 aus Fig. 6 in die Schrägstellung nach Fig. 7 übergeführt wird. Die Fig. 3 und 4 zeigen, dass bei Anbringung einer verschiebbaren Platte 26 sowohl die Sitztiefe veränderbar ist als auch die Schrägstellung unabhängig vom Vorziehen des Sitzelementes 21 verändert werden kann. Es ist also ersichtlich, dass durch diese erfindungsgemäße Ausgestaltung das Sitzelement 21 in der Höhenlage gegenüber der Unterseite oder Oberseite des Fangkörpers 3 veränderbar und in der Tiefe verstellbar ist, wobei gleichzeitig durch den Lordosenstützteil 27 eine Liegeposition unabhängig von der Schrägstellung der Rückenlehne 14, falls diese am Sitzteil 1 angelenkt ist, eingenommen werden kann. Wenn beispielsweise gemäß Fig. 4 die Sitztiefe verlängert ist, kann bei einem Kleinkind sogar eine Beinstütze auf einfache Weise realisiert werden. Die unterschiedlichen Verstellmöglichkeiten ergeben sich beispielhaft aus Fig. 5 unter der Annahme, dass neben dem Sitzelement 21 auch eine Platte 26 zur Verlängerung der Sitztiefe des Sitzelementes vorliegt. Die Funktion des Fangkörpers und die Verschiebemöglichkeit, wie sie anhand von Fig. 1 beschrieben ist, werden auch hier gewahrt.

In den Fig. 8 und 9 ist eine alternative Ausführungsform der Erfindung dargestellt. Dieses Ausführungsbeispiel zeigt, dass die Führungen des Fangkörpers, gleich ob sie nun horizontal oder, wie im Ausführungsbeispiel dargestellt, schräg verlaufend eingebracht sind, in der Höhe gegenüber dem Sitzteil 21 nach den Fig. 2 bis 7 und dem Sitzteil 1 verstellbar sind. Hierzu sind die Führungen in an den Innenseiten oder in der Seitenwand selbst eingesetzten Führungselementen 25 eingebracht. Diese Führungselemente sind, wie die Pfeile verdeutlichen, in der Höhe verstellbar angeordnet, so dass der Fangkörper 3 aus der unteren Position gemäß Fig. 8 beispielsweise in die dargestellte angehobene Position gemäß Fig. 9 verbracht werden kann. In der jeweiligen Position muss das Führungselement 25 fixiert sein. Hierfür bieten sich diverse technische Lösungen an, wie im Beschreibungsteil bereits angegeben. Selbstverständlich wird man im Falle, dass das Kind größer wird, das Rückenlehnenelement 14 auch mit verstellbaren Seitenwänden 15 und einer verstellbaren Kopfstütze 16 oder Seitenschutzteilen versehen und eine entsprechende Höhenanpassung vornehmen. Die Fig. 5, 8 und 9 zeigen aber auch, dass der Sitzteil unabhängig von der Rückenlehne als Sitzerhöhung genutzt werden kann, wobei auch dann das Kind durch den Fangkörper voll geschützt ist, wenn dieser beispielsweise mittels seitlicher Verlängerungsteile den Körper übergreift. Eine solche Anordnung ist beispielsweise aus der DE 36 43 587 A1 bekannt, allerdings nicht mit den erfindungsgemäßen Verstellmöglichkeiten, die hinzutreten.

### Bezugszeichenliste

- 1: Sitzteil
- 2: Seitenwände
- 3: Fangkörper
- 4: Ausnehmung
- 5: Quergurt
- 6: Kraftfahrzeugsitz
- 7: Befestigungspunkte
- 8: Führungsansätze
- 9: Durchbrüche
- 10: Verbindungsteil
- 11: oberer Teil
- 12: Führungselemente
- 13: Boden
- 14: Rückenlehnenelement
- 15: Seitenwände
- 16: Kopfstütze
- 17: Aufrastschlosselemente
- 18: Sitzfläche
- 19: runder Durchbruch
- 20: Betätigungselement
- 21: Sitzelement
- 22: Längsführungen
- 23: Führungsansatz
- 24: Rastfallen
- 25: Führungselemente
- 26: Platte
- 27: Lordosenstützteil

## Patentansprüche

1. Kindersicherheitssitz zum Aufstellen auf einen oder integriert in einem Kraftfahrzeugsitz, mindestens aufweisend ein Sitzteil (1) mit einem Sitzelement (21) und Seitenwänden (2) und einen an den Seitenwänden (2) in Führungen geführten Fangkörper (3), der gegenüber den Seitenwänden (2) mindestens in der Tiefe des Sitzteils relativ verschiebbar angeordnet ist, wobei die Höhenlage des Sitzelementes (21) relativ gegenüber der Unterseite des Fangkörpers (3) einstellbar ist, **dadurch gekennzeichnet, dass** an oder in den Innenseiten der Seitenwände (2) mindestens zwei Längsführungen (22) in die Tiefe und übereinander in definierten Abständen parallel verlaufend eingebracht sind, in die wahlweise das Sitzelement (21) mit seitlichen Führungsansätzen (23) einschiebbar ist, wobei die Längsführungen (22) als Leitkurven ausgebildet sind, wobei die gestreckten Leitkurven so angeordnet sind, dass im Zusammenspiel mit den seitlichen Führungsansätzen (23) an dem Sitzelement (21) dieses in definierte Schräglagen verbringbar ist und wobei mindestens im Endbereich die Führungen (22) Rastfallen (24) zum Einrasten des jeweiligen seitlichen Führungsansatzes (23) an den Seiten des Sitzelementes (21) im eingeschobenen Zustand aufweisen, so dass das Sitzelement (21) in verschiedene Tiefenstellungen verbracht werden kann.

2. Kindersicherheitssitz nach Anspruch 1, **dadurch gekennzeichnet, dass** mehrere Rastfallen (24) über die Länge der Führung (22) verteilt vorgesehen sind, in die die seitlichen Führungsansätze (23) an dem Sitzelement (21) in verschiedenen Vorziehpositionen des Sitzelementes (21) eingreifen.

3. Kindersicherheitssitz nach Anspruch 1, **dadurch gekennzeichnet, dass** die Höhenlage des Fangkörpers (3) relativ gegenüber der Oberseite des Sitzelementes (21) und dem Sitzteil (1) einstellbar ist, dass die Oberseiten der Seitenwände (2) als Führungsebenen für den Fangkörper (3) ausgebildet sind, auf denen der Fangkörper (3) mit Seitenrändern aufliegt, und dass der Fangkörper (3) von einem fahrzeugeigenen Gurt oder Gurtabschnitt oder einem gesonderten Quergurt (5), der mit Aufrastschlosselementen (17) an Fixpunkten des Fahrzeugsitzes befestigbar ist, mitsamt dem Kindersicherheitssitz am Kraftfahrzeugsitz befestigbar ist, wobei der Quergurt (5) über eine vorderseitige Führungsausnehmung (4) am Fangkörper (3) geführt ist.

4. Kindersicherheitssitz nach Anspruch 1, **dadurch gekennzeichnet, dass** die Höhenlage des Fangkörpers (3) relativ gegenüber der Oberseite des Sitzelementes (21) und dem Sitzteil (1) einstellbar ist, dass der Fangkörper (3) seitlich angeformte oder angebrachte Führungsansätze (8) oder Führungselemente aufweist, die in nutenförmigen, parallel verlaufend angeordnete Führungsausnehmungen oder in schlitzförmigen Durchbrüchen (9) in den Seitenwänden (2) wahlweise einschiebbar sind, wobei der Fangkörper (3) von oben und vorne schräg nach hinten unten verlaufend verschiebbar gelagert ist.

5. Kindersicherheitssitz nach Anspruch 4, **dadurch gekennzeichnet, dass** der Fangkörper (3) mit seitlichen Ansätzen oder Seitenrändern die Oberseiten der Seitenwände mindestens teilweise überragt.

6. Kindersicherheitssitz nach einem der Ansprüche 1, 3, 4 oder 5, **dadurch gekennzeichnet, dass** in den Seitenwänden (2) Führungselemente (25) vorgesehen sind, in denen oder auf denen der Fangkörper (3) geführt ist, und dass die Führungselemente (25) gegenüber den Seitenwänden (2) höhenverstellbar in oder an diesen gelagert sind oder durch ineinandergreifende Verzahnungen in der Höhe verstellbar angeordnet sind.

7. Kindersicherheitssitz nach Anspruch 1, **dadurch gekennzeichnet, dass** die Seitenwände (2) jeweils aus einem Kunststoffformteil oder Kunststoffblasformteil bestehen und dass die Führungselemente (25) aus jeweils einem Kunststoffformteil oder aus einem Blasformteil bestehen, wobei die ineinandergreifenden Teile formschlüssig und/oder kraftschlüssig derart miteinander verbunden sind, dass sie gesichert gehalten sind.

8. Kindersicherheitssitz nach Anspruch 1, **dadurch gekennzeichnet, dass** der Kindersicherheitssitz eine abnehmbare oder nicht abnehmbare, mit dem Sitzteil (1) verbundene Rückenlehne (14) aufweist.

9. Kindersicherheitssitz nach Anspruch 1 und 8, **dadurch gekennzeichnet, dass** an dem Sitzelement (21) direkt oder an einer diesem gegenüber verschiebbaren Platte (26) rückseitig verschwenkbar ein Lordosenstützteil (27) angebracht ist, das sich an dem Rückenlehnenelement (14) mindestens abschnittsweise abstützt und durch Vorziehen des Sitzelementes (21) oder durch relatives Verschieben der Platte (26) in unterschiedliche Schräglagen verbringbar ist.

10. Kindersicherheitssitz nach Anspruch 1, **dadurch gekennzeichnet, dass** das Sitzteil (1) vorziehbar oder um einen fiktiven Drehpunkt verschwenkbar auf einem Untergestell montiert ist, das auf dem Fahrzeugsitz aufstellbar ist.

11. Kindersicherheitssitz nach Anspruch 81, **dadurch gekennzeichnet, dass** die Rückenlehne (14) vorstehende Seitenwände aufweist, in die horizontale oder schräg von oben nach unten verlaufende Führungen in Form von Nuten oder Durchbrüchen (9) eingebracht sind, in die die Führungsansätze an dem Fangkörper in den unterschiedlichen Höhenlagen einschiebbar sind.

## Claims

1. Child safety seat for placing on or integrating in a motor vehicle seat, comprising at least a seat part (1) with a seat element (21) and side walls (2) and an impact shield (3), which is guided at the side walls (2) in guides and which is arranged to be displaceable relative to the side walls (2) at least in the depth of the side part, the height position of the seat element (21) being settable relative to the lower side of the impact shield (3), **characterised in that** formed at or in the inner sides of the side walls (2) are at least two longitudinal guides (22), which extend in depth and parallelly one above the other at defined spacings and into which the seat element (21) is selectably insertable by lateral guide projections (23), wherein the longitudinal guides (22) are formed as guide curves, wherein the elongated guide curves are so arranged that in co-operation with the lateral guide projections (23) at the seat element (21) this can be brought into defined inclined positions and wherein the guides (22) at least in the end region have detent catches (24) for detenting the respective lateral guide projection (23) at the sides of the seat element (21) in the inserted state so that the seat element (21) can be brought into different depth settings.

2. Child safety seat according to claim 1, **characterised in that** several detent catches (24) are provided in distribution over the length of the guide (24), in which catches the lateral guide projections (23) at the seat element (21) engage in different drawn-up positions of the seat element (21).

3. Child safety seat according to claim 1, **characterised in that** the height position of the impact shield (3) relative to the upper side of the seat element (21) and the seat part (1) is settable, that the upper sides of the side walls (2) are formed as guide planes for the impact shield (3), on which the impact shield (3) rests by side edges, and that the impact shield (3) is fastenable by a belt or belt section, which is individual to the vehicle, or a separate transverse belt (5), which is fixable to fixing points of the vehicle seat, to the motor vehicle seat together with the child safety seat, wherein the transverse belt (5) is guided by way of a frontal guide recess (4) at the impact shield (3).

4. Child safety seat according to claim 1, **characterised in that** the height position of the impact shield (3) relative to the upper side of the seat element (21) and the seat part (1) is settable, that the impact shield (3) has laterally formed or mounted guide projections (8) or guide elements, which are selectably insertable into groove-shaped, parallelly extending guide recesses or into slot-shaped passages (9) in the side walls (2), wherein the impact shield (3) is mounted to be displaceable downwardly at an inclination in rearward direction from above and the front.

5. Child safety seat according to claim 4, **characterised in that** the impact shield (3) at least partly projects by lateral projections or side edges beyond the upper sides of the side walls.

6. Child safety seat according to any one of claims 1, 3, 4 and 5, **characterised in that** provided in the side walls (2) are guide elements (25) in or on which the impact shield (3) is guided and that the guide elements (25) are mounted to be adjustable in height relative to the side walls (2) in or at these or are arranged to be adjustable in height by interengaging toothings.

7. Child safety seat according to claim 1, **characterised in that** the side walls (2) each consist of a plastics material moulded part or plastics material blow-moulded part and that the guide elements (25) each consist of a plastics material moulded part or a blow-moulded part, wherein the interengaging parts are so mechanically positively and/or frictionally connected together that they are securely held.

8. Child safety seat according to claim 1, **characterised in that** the child safety seat comprises a removable or non-removable backrest (14) connected with the seat part (1).

9. Child safety seat according to claim 1 and 8, **characterised in that** mounted at the seat element (21) directly or at a plate (26), which is displaceable relative thereto, to be pivotable at the rear side is a lumbar support part (27) which is supported at the backrest element (14) at least at a section and can be bought into different inclined positions by drawing forward the seat element (21) or by relative displacement of the plate (26).

10. Child safety seat according to claim 1, **characterised in that** the seat part (1) is mounted on a subframe, which can be placed on the vehicle seat, to be able to drawn forward or pivoted about a notional fulcrum.

11. Child safety seat according to claim 8, **characterised in** the backrest (14) has projecting side walls in which are formed guides, in the form of grooves or passages (9), which extend horizontally or downwardly at an inclination from above and into which the guide projections at the impact shield are insertable in the different height positions.

## Revendications

1. Siège de sécurité pour enfants, à monter sur, ou intégré à un siège de véhicule automobile, comportant au moins une partie d'assise (1) avec un élément d'assise (21) et des parois latérales (2), et un corps de réception (3) guidé dans des glissières contre les parois latérales (2), disposé de manière à être relativement déplaçable par rapport aux parois latérales (2), au moins dans la profondeur de la partie d'assise, la position en hauteur de l'élément d'assise (21) étant réglable par rapport à la face inférieure du corps de réception (3), **caractérisé en ce qu'**au moins deux glissières longitudinales (22) sont ménagées en profondeur contre ou dans les faces internes des parois latérales (2) et s'étendent parallèlement à espacement défini l'une au-dessus de l'autre, l'élément d'assise (21) y étant insérable sélectivement par des saillies de guidage latérales (23), les glissières longitudinales (22) étant réalisées comme courbes de guidage, les courbes de guidage étirées étant disposées de manière à permettre le réglage de l'élément d'assise (21) dans des positions inclinées définies en coopération avec les saillies de guidage latérales (23) contre celui-ci, et les glissières (22) présentant au moins dans leur partie d'extrémité des segments de verrouillage (24) pour l'enclenchement en état d'insertion de saillies de guidage latérales (23) correspondantes sur les côtés de l'élément d'assise (21), de manière à permettre le réglage de l'élément d'assise (21) dans différentes positions en profondeur.

2. Siège de sécurité pour enfants selon la revendication 1, **caractérisé en ce que** plusieurs segments de verrouillage (24) sont prévus répartis sur la longueur de la glissière (22), où s'engagent dans différentes positions de translation de l'élément d'assise (21) les saillies de guidage latérales (23) contre l'élément d'assise (21).

3. Siège de sécurité pour enfants selon la revendication 1, **caractérisé en ce que** la position en hauteur du corps de réception (3) est réglable par rapport à la face supérieure de l'élément d'assise (21) et à la partie d'assise (1), **en ce que** les faces supérieures des parois latérales (2) sont réalisées comme plans de guidage pour le corps de réception (3), sur lesquels le corps de réception (3) repose par ses bords latéraux, et **en ce que** le corps de réception (3) peut être fixé par une ceinture ou une partie de ceinture propre au véhicule ou par une ceinture transversale (5) distincte fixable par des éléments d'encliquetage (17) sur des points de fixation du siège de véhicule, au moyens desquels le siège de sécurité pour enfants est fixable contre le siège de véhicule automobile, la ceinture transversale (5) étant guidée par un évidement de guidage avant (4) sur le corps de réception (3).

4. Siège de sécurité pour enfants selon la revendication 1, **caractérisé en ce que** la position en hauteur des corps de réception (3) est réglable par rapport à la face supérieure de l'élément d'assise (21) et à la partie d'assise (1), **en ce que** le corps de réception (3) présente des saillies de guidage (8) ou des éléments de guidage ménagés ou appliqués latéralement, insérables sélectivement dans des évidements de guidage en forme de rainures, s'étendant parallèlement les uns aux autres ou dans des traversées (9) en forme de fentes dans les parois latérales (2), le corps de réception (3) étant logé de manière déplaçable obliquement vers le bas et vers l'arrière depuis le haut et l'avant.

5. Siège de sécurité pour enfants selon la revendication 4, **caractérisé en ce que** le corps de réception (3) dépasse au moins partiellement des faces supérieures des parois latérales par des saillies latérales ou par des bords latéraux.

6. Siège de sécurité pour enfants selon l'une des revendications 1, 3, 4 ou 5, **caractérisé en ce que** des éléments de guidage (25) sont prévus dans les parois latérales (2), dans lesquels ou sur lesquels est guidé le corps de réception (3), et **en ce que** les éléments de guidage (25) sont logés dans ou contre les parois latérales (2) de manière réglable en hauteur par rapport à celles-ci, ou sont disposés de manière réglable en hauteur au moyen de dentures engrenées les unes dans les autres.

7. Siège de sécurité pour enfants selon la revendication 1, **caractérisé en ce que** les parois latérales (2) sont constituées chacune d'une pièce plastique moulée ou d'une pièce plastique moulée par soufflage, et **en ce que** les éléments de guidage (25) sont constitués chacun d'une pièce plastique moulée ou d'une pièce moulée par soufflage, les parties en prise l'une dans l'autre étant raccordées par correspondance de forme et/ou par force de manière à être maintenues de manière sûre.

8. Siège de sécurité pour enfants selon la revendication 1, **caractérisé en ce que** ledit siège de sécurité pour enfants comporte un dossier (14) amovible ou inamovible, raccordé à la partie d'assise (1).

9. Siège de sécurité pour enfants selon les revendications 1 et 8, **caractérisé en ce qu'**une pièce d'appui dorso-lombaire (27) est appliquée sur l'élément d'assise (21), directement ou contre un plateau (26) déplaçable par rapport à celui-ci de manière à pouvoir pivoter vers l'arrière, et repose au moins en partie contre l'élément de dossier (14) et peut être réglée dans différentes positions d'inclinaison par avance de l'élément d'assise (21) ou par déplacement relatif du plateau (26).

10. Siège de sécurité pour enfants selon la revendication 1, **caractérisé en ce que** la partie d'assise (1) est montée de manière à pouvoir être avancée ou à pivoter autour d'un point de rotation fictif, sur un châssis installable sur le siège de véhicule.

11. Siège de sécurité pour enfants selon la revendication 8, **caractérisé en ce que** le dossier (14) présente des parois latérales dressées, où sont ménagées des glissières s'étendant horizontalement ou obliquement du haut vers le bas sous la forme de rainures ou de traversées (9), dans lesquelles les saillies de guidage sont déplaçables aux différentes hauteurs contre le corps de réception.
